(19) **Europäisches Patentamt European Patent Office Office européen des brevets**

(11) **EP 4 460 771 B1**

(12) **EUROPEAN PATENT SPECIFICATION**

(45) Date of publication and mention of the grant of the patent:
**07.05.2025 Bulletin 2025/19**

(21) Application number: **22847633.9**

(22) Date of filing: **30.12.2022**

(51) International Patent Classification (IPC):
*G06V 20/70* (2022.01)    *G11B 27/031* (2006.01)
*G06F 16/683* (2019.01)    *G11B 27/10* (2006.01)
*G11B 27/28* (2006.01)

(52) Cooperative Patent Classification (CPC):
**G11B 27/10; G06F 16/683; G06V 20/70; G11B 27/031; G11B 27/28**

(86) International application number:
**PCT/IB2022/062917**

(87) International publication number:
**WO 2023/131864 (13.07.2023 Gazette 2023/28)**

(54) **METHOD AND SYSTEM FOR REAL-TIME AUDIO/VIDEO SYNCHRONIZATION**

VERFAHREN UND SYSTEM ZUR AUDIO/VIDEO-SYNCHRONISIERUNG IN ECHTZEIT

PROCEDE ET SYSTEME DE SYNCHRONISATION AUDIO/VIDEO EN TEMPS REEL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.01.2022 IT 202200000080**

(43) Date of publication of application:
**13.11.2024 Bulletin 2024/46**

(73) Proprietor: **Sounzone S.r.l.**
**10133 Torino (IT)**

(72) Inventors:
• **LAMBERTI, Tiziano**
 **10133 Torino (IT)**
• **FACCINI, Paolo**
 **10133 Torino (IT)**
• **ABRATE, Carlo**
 **10133 Milano (IT)**

(74) Representative: **Mozzi, Matteo**
 **Jacobacci & Partners S.p.A.**
 **Via Senato, 8**
 **20121 Milano (IT)**

(56) References cited:
**US-A1- 2017 092 328**    **US-A1- 2021 020 149**
**US-B1- 10 140 515**    **US-B1- 10 276 189**

## Description

<u>Field of the invention</u>

The present invention relates to audio/video synchronization techniques, in particular to a method for real-time audio/video synchronization and related system.

<u>Technological background of the invention</u>

Nowadays, the audio tracks in a digital music library are mainly used in various types of videos or projects on different media, such as video games, for example.

In the first case, the users, mainly video makers and editors, acquire an audio track from a digital music library and later perform local tests on the audio track, synchronizing it with the video being processed.

This synchronization operation can be performed with different video editing software in which the audio track and the video track are uploaded, later encoded and exported together in a single video content so as to be used together.

This procedure, between selecting the audio track, then encoding the video track with the selected audio track (audio/video synchronization) and finally sharing the video with the synchronized audio track with an assessment team and then with a possible customer, requires hours of work, and even more time is required in the case of creative video products (such as commercials, videos for social networks, films or documentaries) where there is a need to repeat it several times, ending up with the perfect audio track for the reference video.

Moreover, when a customer and/or various managers within the same company are to be faced, such a procedure is further slowed down and the work of various components on the creative team is required several times at each new attempt.

Indeed, a musical supervisor must search for new musical tracks based on the feedback received from the customer, an editor is then to synchronize the new audio track again with the video and the resulting video product is to be sent again to the performance testing step of the audio track on the reference video and for final approval.

Thus, the need is strongly felt to provide a method for audio/video synchronization which considerably reduces the procedure time for selecting an audio track and the performance tests on a selected audio track on a reference video. Prior art is known from US 2017/092328 A1.

<u>Summary</u>

It is the object of the present invention to devise and provide a method for real-time audio/video synchronization which allows at least partially obviating the above drawback with reference to the known art, in particular which allows considerably reducing the procedure time for selecting an audio track and the performance tests on a selected audio track on a reference video, while ensuring users adequate support in selecting the best audio track adapted to the video.

Such an object is achieved by a method according to claim 1.

Preferred embodiments of said method are defined in the dependent claims.

A system for real-time audio/video synchronization is also an object of the present invention.

<u>Brief description of the drawings</u>

Further features and advantages of the method and related system according to the invention will become apparent from the following description of preferred embodiments, given by way non-limiting indication, with reference to the accompanying drawings, in which:

- Figure 1 diagrammatically shows, by means of a functional block diagram, a system for real-time audio/video synchronization according to the present invention;
- Figures 2-5 diagrammatically show respective screens of a user interface usable in the system for real-time audio/video synchronization according to the present invention;
- Figure 6 shows an example of a mathematical matrix usable when performing the method for real-time audio/video synchronization according to the present invention, and
- Figure 7 diagrammatically shows, by means of a block diagram, a method for real-time audio/video synchronization according to the present invention.

It should be noted that, in the aforesaid drawings, equal or similar elements are indicated by the same numeric and/or alphanumeric reference.

<u>Detailed description</u>

With reference to the aforesaid drawings, a system 100 for real-time audio/video synchronization according to the present invention, hereinafter simply synchronization system or only system, is now described.

The system 100 comprises a central electronic computer 1.

The central electronic computer 1 comprises a respective data processing unit 2, e.g., a microcontroller or microprocessor.

The central electronic computer 1 further comprises a memory unit 3 operatively connected to the data processing unit 2.

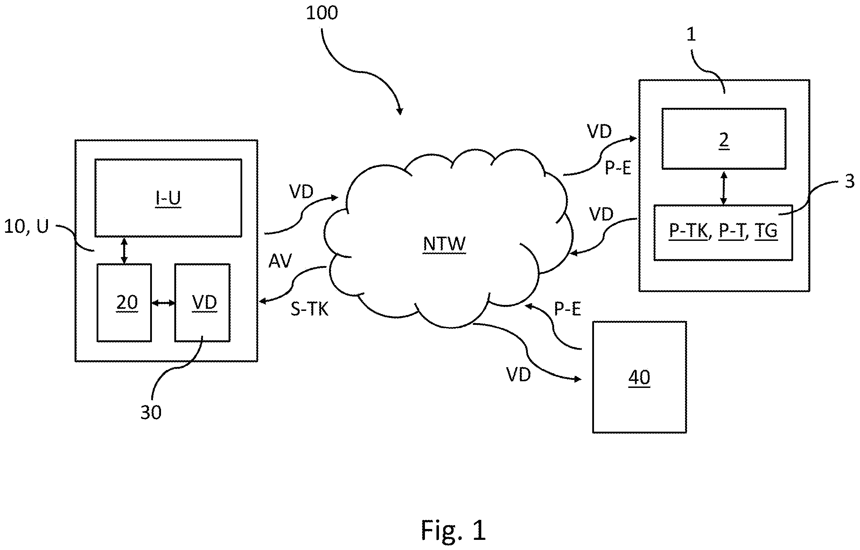

The memory unit 3 can be outside (as diagrammatically shown in Figure 1) or inside the data processing unit 2 (embodiment not shown in the drawings).

The data processing unit 2 is configured, by means of uploading and executing one or more program codes stored in the memory unit 3, to perform the method for real-time audio/video synchronization of the present invention, as described below.

It should be noted that in addition to storing one or more program codes, the memory unit 3 is configured to store the data generated and processed following the execution of said one or more program codes.

Moreover, the memory unit 3 is configured to store a plurality of audio tracks P-TK, preferably musical audio tracks, provided by the central electronic computer 1, by means of a respective digital platform, when performing the method for real-time audio/video synchronization of the present invention.

The central electronic computer 1 is configured to upload a video content VD received by means of a user interface I-U provided by the central electronic computer 1, usable online by a local electronic device 10 of a user U requesting a service for real-time audio/video synchronization, operatively connected to the central electronic computer 1 by means of a data communication network NTW (diagrammatically shown in Figure 1), e.g., the Internet.

As shown in Figure 1, the local electronic device 10 comprises a respective local data processing module 20, for example a microcontroller or microprocessor.

The local electronic device 10 further comprises a local memory module 30 operatively connected to the local data processing module 20.

The local memory module 30 can be outside (as diagrammatically shown in Figure 1) or inside the local data processing module 20 (embodiment not shown in the drawings).

The local data processing module 20 is configured, by uploading and executing one or more program codes stored in the local memory module 30, to allow the operation of the local electronic device 10, in particular also to allow the user U to access a service for real-time audio/video synchronization, according to the present invention, provided by the central electronic computer 1.

It should be noted that, in addition to storing one or more program codes, the local memory module 3 is configured to possibly also store one or more video contents VD which the user U requesting a service for real-time audio/video synchronization generated and with which an audio track can require synchronizing.

The local electronic device 10 of the user U requesting the service for real-time audio/video synchronization is any electronic device having accessibility to the data communication network NTW to use, via Web of the user interface I-U, e.g., a personal computer, a notebook, a tablet, a smartphone, and so on.

The user U requesting the service for real-time audio/video synchronization is any user, private or a company, video maker or editor, with the need to assess and propose to third parties, e.g., a possible customer, a previously recorded video synchronized, with the best audio track possible in terms of sound performance, with the video images and dynamics.

In an embodiment, the video content VD to be uploaded can be uploaded by the user U by performing a "drag and drop" operation from his/her local electronic device 10, i.e., by dragging the video content VD onto a respective first video uploading area A1 of the user interface I-U.

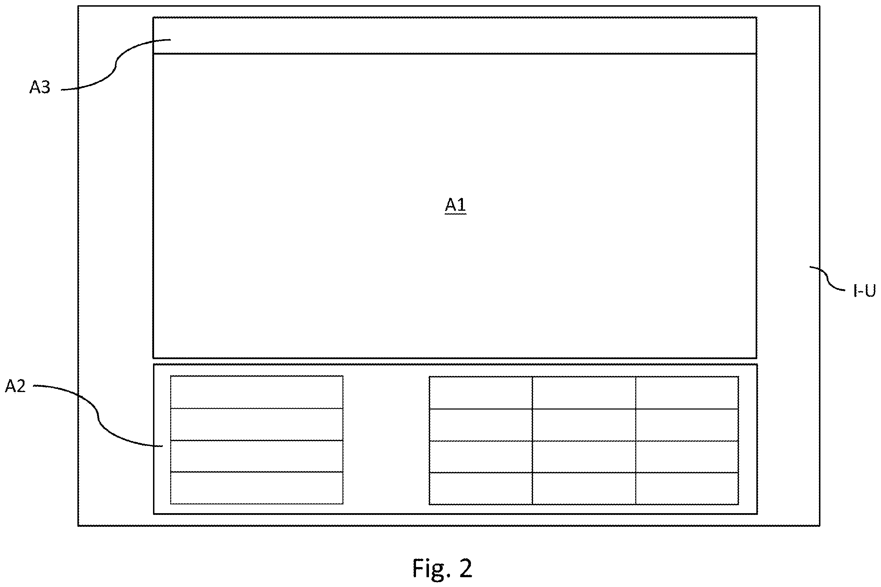

The first video uploading area A1 is shown in Figures 2, 3 and 4.

In an embodiment, as an alternative to the previous one, the video content VD to be uploaded can be uploaded by the user U by selecting, from the local file system among the video content stored in the local memory module 30 of the respective local electronic device 10, i.e., specifying, within the user interface I-U, a path URL corresponding to the position of the video content VD to be uploaded present in the local memory module 30.

For example, possible formats of the video content to be uploaded are MPEG-4, WEBM, FLV, and so on.

It should be noted that the central electronic computer 1 is configured to upload content VD as a video track, ignoring and/or muting any audio track associated with the video content acquired during the recording of the video content.

Returning to the system 100 according to the present invention and to Figure 1, the system 100 further comprises a classifier module (or concentrator) 40 operatively connected to the central electronic computer 1.

The classifier module 40 can be outside the central electronic computer 1 and operatively connected thereto by means of the data communication network NTW (as shown in Figure 1). Alternatively, the classifier module 40 can be integrated in the central electronic computer 1.

Once the video content VD is uploaded, the central electronic computer 1 is configured to provide the video content VD to a classifier module 40.

In this regard, in an embodiment, prior to providing the video content VD to the classifier module 40, the central electronic computer 1 is configured to process the video content VD so as to reduce the size thereof in order to limit the uploading and analysis times by the classifier module 40.

For example, if it is not, the central electronic computer 1 is configured to convert the video content VD into an MPEG-4 format with a set maximum duration, e.g., 30 seconds, and a set size, e.g., 50 megabytes.

Once the video content VD has been received by the central electronic computer 1, the classifier module 40 is configured, by means of specific artificial intelligence algorithms (AI), to analyze, frame by frame, the video content VD received by the central electronic computer 1 and generate a plurality P-E of visual elements (tags) found in the video content VD, associating a corresponding confidence score with each visual element.

The usable artificial intelligence algorithms are, for example, visual ranking algorithms in continuous evolution, the purpose of which is to analyze each individual frame of the video content VD, divide each individual frame into areas up to identifying recognizable individual visual elements (for example, cat, cup, automobile, and so on) and return the name of the recognized visual element, while associating the position coordinates within the frame and the respective size with such a name.

"Confidence score" means an estimated percentage of certainty of having recognized a visual element.

A confidence score value close to "1" corresponds to a high confidence score which indicates the certain and predominant presence of the recognized visual element in the video content.

Contrarily, a lower confidence score value, close to "0", corresponds to a low (poor) confidence score which indicates that the visual element was not actually recognized, rather a false positive is involved.

The visual elements with the highest confidence score values within the aforesaid confidence score scale, from "0" to "1", will be given increased importance in the system 100 according to the present invention.

The classifier module 40 is configured to provide the central electronic computer 1 with the generated plurality P-E of visual elements.

In an embodiment, prior to providing the central electronic computer 1 with the generated plurality P-E of visual elements, the classifier module 40 is configured to aggregate the results obtained from the analysis of all the frames of the video content VD in order to yield the plurality P-E of visual elements found in the video content which is as consistent as possible with the general contents of the video content VD.

Returning in general to the system 100 according to the present invention, the central electronic computer 1 is configured to receive the generated plurality P-E of visual elements from the classifier module 40.

The central electronic computer 1 is further configured to generate at least one tag TG representative of the video content VD starting from the plurality P-E of visual elements generated by and received from the classifier module 40.

In greater detail, the plurality P-E of visual elements (tags) received from the classifier module 40 is processed by the central electronic computer 1 and translated into synonymous tags in a root tag database (not shown in the drawings) operatively connected to the central electronic computer 1.

For example, if the classifier module 40 finds an automobile as visual element and recognizes it as "BUGATTI" (tag), the central electronic computer 1 recognizes the tag "BUGATTI" as belonging to the group of the "AUTOMOTIVE" root tag.

Therefore, the generated at least one tag TG in this case will be "AUTOMOTIVE", whereby several tens of relevant audio tracks will be tagged.

It should be noted that the greater the number of generated tags representative of the video content VD, the better the representation of the video content VD by means of the corresponding tags.

According to an embodiment, the central electronic computer 1 is further configured to generate more than one tag TG representative of the video content VD starting from the plurality P-E of visual elements generated by and received from the classifier module 40, preferably at least four tags.

The central electronic computer 1 is further configured to select a sub-group S-TK of audio tracks of said plurality P-TK of audio tracks stored in the memory unit 2 based on the at least one tag TG representative of the video content VD generated by the central electronic computer 1.

Each audio track of said plurality P-TK of audio tracks comprises a plurality P-T of tags associated with said audio track.

Each audio track of the plurality P-TK of audio tracks is stored in the memory unit 2 by assigning a numerical value representative of a score to each tag of the respective plurality P-T of tags.

The central electronic computer 1 is configured to search for the at least one tag TG representative of the video content VD generated by the central electronic computer 1 in each plurality P-T of tags assigned to each audio track of said plurality P-TK of audio tracks.

The central electronic computer 1 is configured to select the audio tracks comprising the searched at least one tag TG as sub-plurality S-TK of audio tracks of said plurality P-TK of audio tracks.

The central electronic computer 1 is configured to sort the selected audio tracks of the sub-plurality S-TK of audio tracks in descending order based on the score of the searched at least one tag TG assigned to each audio track.

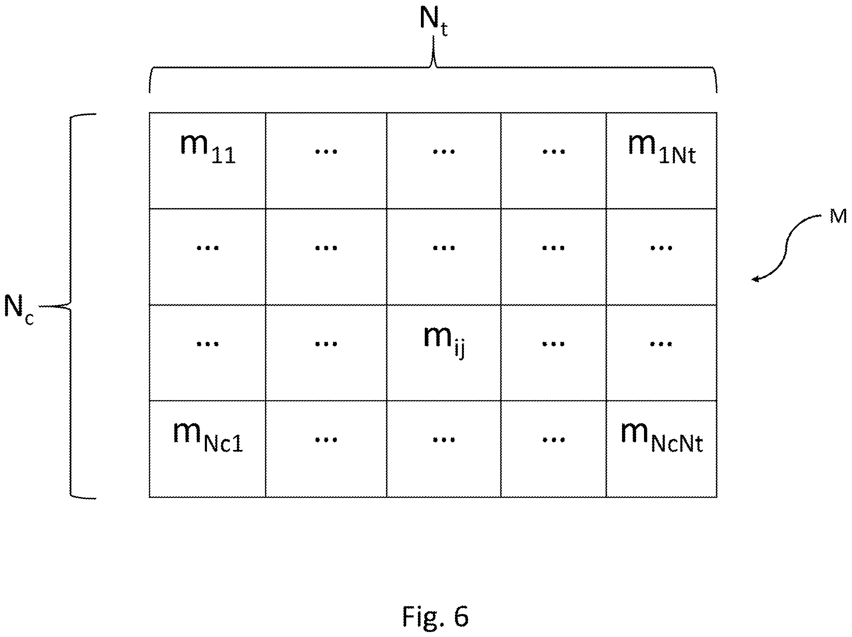

In this regard, with particular reference also to Figure 6, an example of method for storing the plurality P-TK of audio tracks in the memory unit 2 of the central electronic computer 1 and a method for selecting a subgroup S-TK of audio tracks of said plurality P-TK of audio tracks based on the search for the at least one tag TG, are now described.

Firstly, it should be noted that the assignment of tags to audio tracks is already present online and is typically performed according to stylistic or technical elements attributable to the audio track itself.

This allows searching for relevant audio content but can also be cold and repetitive from a creative viewpoint.

To improve this technique, so-called mood and cultural reference elements can be included in each tag associated with an audio track.

The technique suggested in the present invention consists in assigning a score, i.e., a value in weight, to each tag associated with an audio track.

In greater detail, according to the present invention, the Applicant has introduced two types of tags:

- root tag;
- synonym tags.

The root tags actually represent the only type of tags associated with an audio track.

Various synonym tags can refer to each root tag, the synonym tags being obtained from linguistic synonyms but especially from tags which were put into relation for mood elements and cultural references.

Each root tag can have a variable number of synonyms in continuous evolution.

For example, the root tag "abstract" can have, as synonym tags, one or more of: "transcendent", "whimsical", "ideational", "mental", "weird", "putative", "suppositive", "utopian", "non concrete", "theoretical", "indefinite", "immaterial", "extravagant", "unrealistic", "hypothetical", "reverie", "intellectual", "conceptual", "experimental", "metaphysical", "abstracted", "conjectured", "outline", "notional", "abstractive", "strange", "vague", "complex", "chimerical", "philosophical", "odd", "psychedelic", "avant-garde", "suppositional", "recondite", "peculiar", "abstruse", "discrete", "unreal", "transcendental", "freak", "conjectural", "suppositious".

The compilation of various editorial playlists can be added to this structure, where for different genres and moods, an *ad hoc* playlist of audio tracks, preferably musical audio tracks, can be created, being particularly representative of that category.

It should be noted that these playlists are continuously evolving and are a significant editorial component which can be inserted into the proposal of audio tracks stored in the memory unit 2 of the central electronic computer 1.

These audio tracks, specifically assessed by a team of experts, have a higher score than other audio tracks.

By way of example, if a search for the at least one tag TG is made within this plurality P-TK of audio tracks, the audio tracks obtained as a result of the search will be sorted in descending order (from the highest score to the lowest score) following a logic of this type:

- the audio tracks must contain all the searched tags and be in the editorial playlists;
- the audio tracks must contain a synonym tag for each searched root tag and be in the editorial playlists;
- the audio tracks must contain all the searched tags. At this level, those present in the editorial playlists are also ignored;
- the audio tracks must contain a synonym tag. At this level, those present in the editorial playlists are also ignored;
- the audio tracks must contain the name of the song or artist.

Greater detail is now provided on the method of storing the plurality P-TK of audio tracks in the memory unit 3 of the central electronic computer 1, implemented to date.

Firstly, the process performed resulted in the definition of two main modules:

- a first main module, referred to as Tree Tags, representative of the tag data structure implemented in the present invention;
- a second main module, referred to as Co-Occurrence Track Ranking, representative of the audio track search and ranking method implemented in the present invention.

For the definition of the first main module (Tree Tags), the following operations were performed:

- selecting the root tags;
- associating synonyms and keywords semantically associated with the root tags (Keyword Expansion);
- manual control for cleaning and associating the old tags with the root tags (Human Override).

In the first Root Tags operation, a previous version of the tag data structure, in which there was an association of the tags associated with the songs in macro categories such as INST/VOX, GENRE, SUB-GENRE, MOOD, AMBIENTS, INSTRUMENTS, MOVIE TYPE, TV TYPE, FREE, PRODUCT AREA, SOUND A LIKE, TEMPO, for example, was updated starting from the aforesaid macro categories by selecting three new macro categories, i.e., MOOD, ENVIRONMENT, VIDEO TYPE.

For each new macro category, a small number of tags was associated, which could partition the macro reference category, the latter being referred to as Root Tags.

In the second operation (Keyword Expansion), other tags which are semantic synonyms of the root tags, were associated for each root tag.

Examples of methods of selecting the synonyms used comprise: Word2Vec synonyms, Human Override.

In the third operation (Human Override), the synonym selection and association process was further cleaned and completed, adding further synonyms and automatically filtering the specific synonyms during the Keyword Expansion operation.

The second main module (Co-Occurrence Track Ranking), an audio track search and ranking system, can be represented by a matrix $M \in \mathbb{R}^{N_c * N_t}$ (an example of which is shown in Figure 6) with:

- $N_c \in \mathbb{N}^+$ rows equal to the number of tags in the collection (corpus) at the basis of the system 100;

- $N_t \in \mathbb{N}^+$ columns equal to the number of audio tracks stored in the memory module 3 (S in the mathematical representation) of the central electronic computer 1.

Each element $m_{ij} \in M$ represents the score of the i-th tag of the corpus $t_i \in$ *corpus* for the j-th audio track $s_j \in S$.

The scores of matrix M are determined following the definition of the following metrics.

A matrix of the co-occurrences $M_{CO} \in \mathbb{N}^{Nc*Nc}$ is a square matrix with rows and columns equal to the number of tags in the corpus, where each element in the matrix $co_{ij} \in M_{CO}$ counts in number of audio tracks which have both $t_i$ and $t_j$.

Such a matrix Mco allows defining a distance between a tag $tag_i \in$ *corpus* and an audio track $s_k \in S$, where an audio track is defined by the plurality P-T of tags associated therewith $s_k = \{t_{kj}\}_{j=1,...,T_K}$, as follows:

$$d(s_k, tag_i) = \frac{1}{T_k} \sum_{j=1}^{T_k} \frac{co_{ji}}{co_{jj}}$$

Intuitively, the distance defined between an audio track and a tag measures the level of co-occurrence between the tags in the audio track and the at least one input tag TG to be searched for.

There are two normalizations of this measurement, $co_{ji}$ is discounted by the $co_{jj}$ in order to make the "rarest" tags (which occur less often) more significant.

Such a normalization is very frequent in information retrieval systems and is often referred to as *tf.idf,* i.e., *term frequency-inverse document frequency.*

The second normalization is required in order to take into consideration the total number of tags present in each audio track, this number not being constant between all the audio tracks.

Accordingly, such a distance measurement allows defining the symmetrical matrix $M \in \mathbb{R}^{Nc*Nt}$, setting $m_{ij} = d(s_j, tag_i)$.

Finally, the matrix $M \in \mathbb{R}^{Nc*Nt}$ can be simplified by setting certain values of the matrix to 0 so as to make the matrix more scattered.

Indeed, considering the column of a determined audio track $s_j \in S$, $\forall t_i \in$ *corpus* such that the tag is not present among the tags of the audio track $t_i \notin s_j$, the value of the corresponding matrix $m_{ij} \in M$ is set to zero.

As for the search for one or more tags in each plurality P-T of tags associated with an audio track, in the case of a search for a single tag (*tag_i),* the first search operation occurs at the association level between the input tag to be searched for and the tags in the corpus.

To this end, two possible solutions are provided:

- $tag_i \in$ *corpus,* tag in the corpus of the tags (*corpus*);
- $tag_i \notin$ *corpus,* tag absent.

In this second case, the search can suggest the set of tags most similar to the tag *tag_i* to be searched for.

As a second operation, the tag of the selected corpus $tag_i$ is considered and the row of the matrix $M \in \mathbb{R}^{Nc*Nt}$ corresponding to the $tag_i$, i.e., $M_i \in \mathbb{R}^{Nt}$, is selected.

At this point, a decreasing sorting operation is applied to the row $M_i$ and the final ranking of the audio tracks to be provided to the user U is obtained for the $tag_i$.

Instead, in the case several tags are searched for, for example two, the first operation is equal to the case of the search for a single tag, i.e., two tags of the corpus are associated with the two input tags to be searched for: $tag_1, tag_2 \in$ *corpus.*

As a second operation step, the two rows of the matrix $M \in \mathbb{R}^{Nc*Nt}$ corresponding to the two input tags are selected: $M_1, M_2 \in \mathbb{R}^{Nt}$.

In order to create a final score corresponding to the two input tags for each audio track, the following vector product is calculated:

$$M_{12} = \sum_{i=1}^{|corpus|} 1_{m_{1i}} * 1_{m_{2i}}(m_{1i} + m_{2i})$$

Where $1_{m_{ij}} = 0$ if $m_{ij} = 0$ and $1_{m_{ij}} = 1$ if $m_{ij} > 0$, to consider only the audio tracks having both the tags considered.

Therefore, the vector $M_{12} \in \mathbb{R}^{Nt}$ contains the scores of each audio track with respect to the two input tags to be searched for.

As for the individual search, after the decreasing sorting operation, the final ranking is obtained.

Returning to the system 100 according to the present invention, the central electronic computer 1 is configured to provide the user U requesting the service for real-time audio/video synchronization with the sub-group S-TK of audio tracks selected and sorted based on the relevance to the uploaded video content VD.

In greater detail, the central electronic computer 1 is configured to provide the sub-group S-TK of audio tracks selected and sorted based on the relevance to the uploaded video content VD in a respective area A2 for providing audio tracks of the user interface I-U usable online by means of the local electronic device 10 of the user U requesting the service for real-time audio/video synchronization.

It should be further noted that the central electronic computer 1 is configured to provide the at least one tag TG used to search for the sub-group S-TK of audio tracks in a third area A3 of the user interface I-U usable online by means of the local electronic device 10 of the user U requesting the service for real-time audio/video synchronization.

The central electronic computer 1 is configured to receive, from the user U, the selection of an audio track TK of said sub-group S-TK of audio tracks to be synchronized with the video content VD.

The central electronic computer 1 is configured to generate an audio/video content AV comprising the uploaded video content VD synchronized with the audio track TK selected by the user.

In this regard, in an embodiment, when generating the audio/video content AV, the central electronic computer 1 is configured to:

- establish a starting point of the video content VD;
- establish a starting point of the selected audio track TK;
- establish a maximum duration of the video (in seconds or up to the end of either the video content VD or the selected audio track TK);
- encode the video content VD and the selected audio track TK (operation which can require several minutes by the central electronic computer 1);
- decode the video content VD and the audio track TK, generating the audio/video content AV as a mix of the video content VD with the selected audio track TK.

In an embodiment, in combination with the previous one, the central electronic computer 1 is further configured to notify the user U requesting the service for real-time audio/video synchronization (for example, by a notification on the user interface I-U or other channel, e.g., email) of the end of the encoding and/or decoding operation, thus of the generation of the audio/video content AV.

It should be noted that the audio/video content is preferably generated in MPEG-4 format with a set restrained bit-rate (for example, equal to 1-2 Mbit/s) so as to be easily used as a preview version of a final audio/video content.

The central electronic computer 1 is thus configured to provide the user U requesting the service for real-time audio/video synchronization with the generated audio/video content AV.

Thus, following the selection, by the user U, of the audio track TK of said sub-group S-TK of audio tracks to be synchronized with the video content VD, and the time required for the generation thereof having passed, the user U can use the received audio/video content AV of the central electronic computer 1 by means of the user interface I-U usable online.

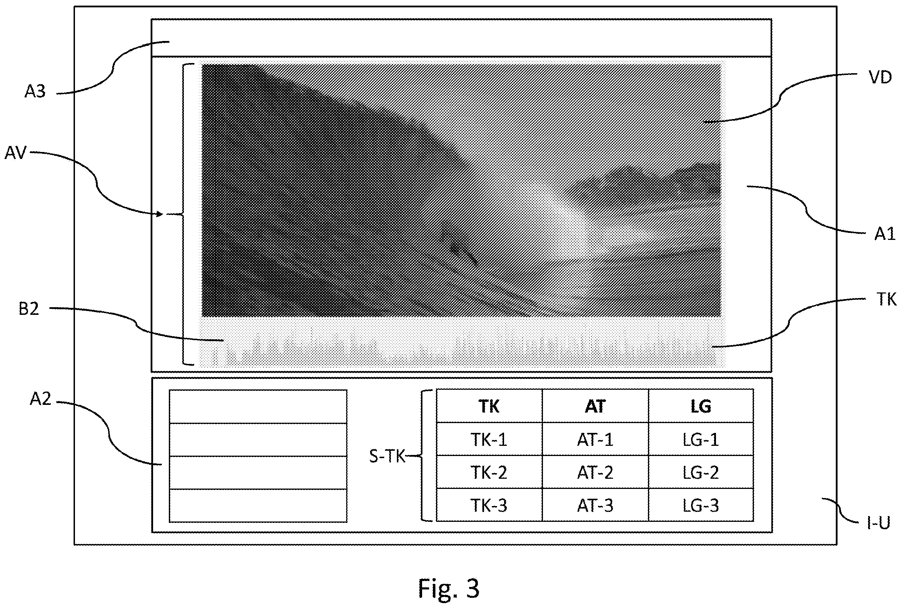

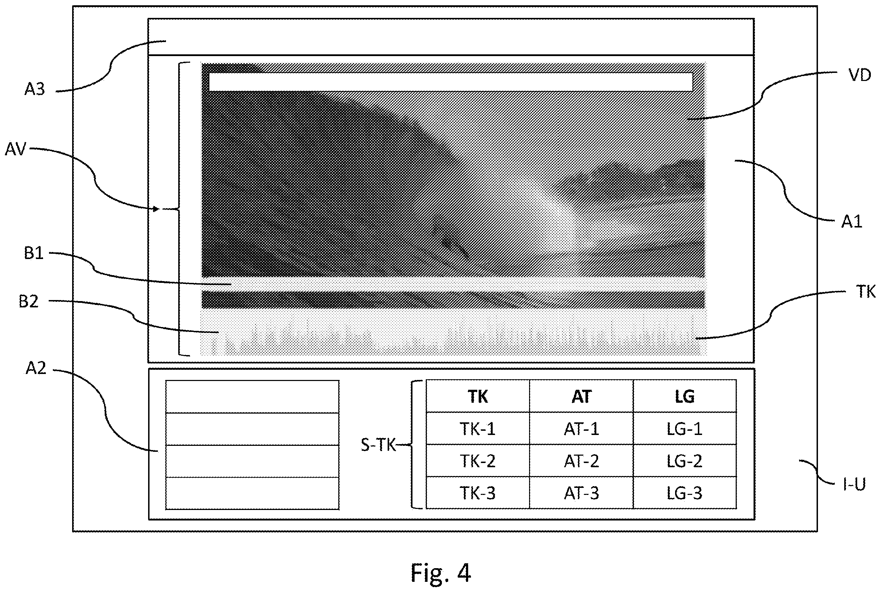

The selected audio track TK is represented in the user interface I-U as a waveform of the corresponding audio signal, as shown in Figures 3 and 4.

In greater detail, the user interface I-U is configured to allow the user U to:

- play the audio/video content AV; it should be noted that executing the video track involves the synchronized execution of the audio track, and vice versa;
- skip to a next play point of the video track and the audio track by selecting such a next point on a first slider bar B1 of the video track VD (preferably overlapping the portion of the video) or on a second slider bar B2 of the selected audio track TK (preferably located below the video).

Thereby, the user U can best assess whether the selected audio track TK is suitable or not to the uploaded video content VD according to the creative idea thereof.

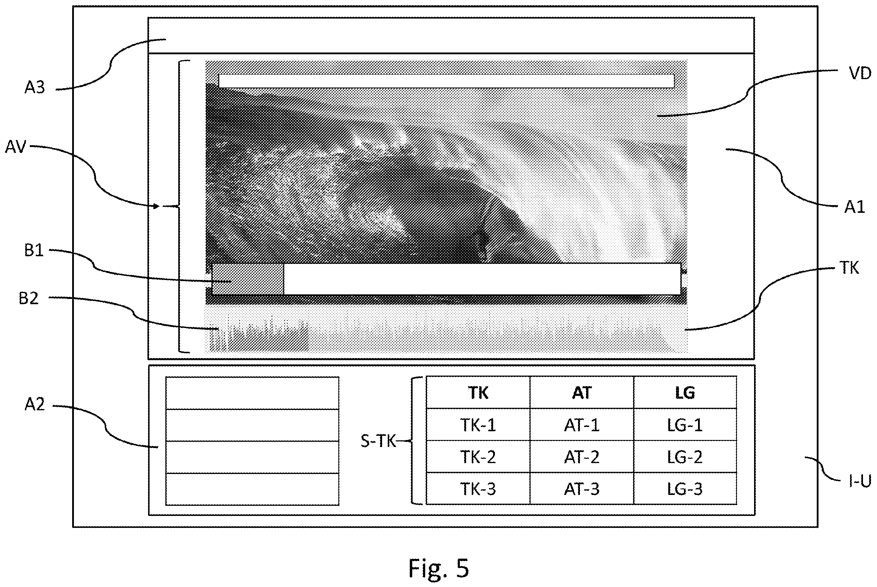

An example of the first slider bar B1 of the video track VD and the second slider bar B2 of the selected audio track TK is shown in Figures 4 and 5.

If the selected audio track TK synchronized with the video content VD in the audio/video content AV used as a preview by means of the user interface I-U is not suitable, in order to find an audio track which better corresponds to one's creativity, the user U can select another audio track of the sub-group S-TK provided in the respective area A2 for providing audio tracks of the user interface I-U or cause the central electronic computer 1 to generate a further sub-group S-TK of audio tracks of the plurality P-TK of audio tracks stored in the memory unit 2 of the central electronic computer 1, and then execute an audio track of the further sub-group S-TK of audio tracks.

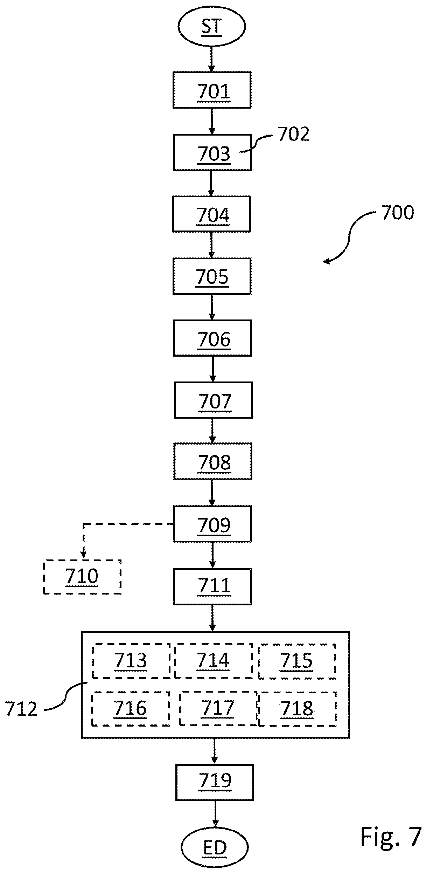

With reference now to Figure 7, a method 700 for real-time audio/video synchronization according to the present invention, hereinafter simply synchronization method or simply method, is now described.

The method 700 comprises a symbolic step of starting ST.

The method 700 comprises a step of uploading 701, by a central electronic computer 1, a video content VD received by means of a user interface I-U provided by the central electronic computer 1, usable online by a local electronic device 10 of a user U requesting a service for real-time audio/video synchronization, operatively connected to the central electronic computer 1 by means of a data communication network NTW.

The central electronic computer 1 and the local electronic device 10 were already described above.

Methods for uploading the video content VD by the user U were described above with reference to various embodiments.

For example, possible formats of the video content to be uploaded are MPEG-4, WEBM, FLV, and so on.

It should be noted that the central electronic computer 1 uploads content VD as a video track, ignoring and/or muting any audio track associated with the video content acquired during the recording of the video content.

The method 700 comprises a step of providing 702, by the central electronic computer 1, the uploaded video content VD to a classifier module 40 operatively connected to the central electronic computer 1.

As already mentioned above, the classifier module 40 can be outside the central electronic computer 1 and operatively connected thereto by means of the data communication network NTW (as shown in Figure 1). Alternatively, the classifier module 40 can be integrated in the central electronic computer 1.

In an embodiment, shown with dashed lines in Figure 7, the step of providing 702 the video content VD to the classifier module 40 comprises a step of processing 703, by the central electronic computer 1, the uploaded video content VD so as to reduce the size thereof, in order to limit the uploading and analysis times by the classifier module 40.

For example, if it is not, the central electronic computer 1 converts the video content VD into an MPEG-4 format with a set maximum duration, e.g., 30 seconds, and a set size, e.g., 50 megabytes.

The classifier module 40 analyzes, by means of specific artificial intelligence algorithms (AI), frame by frame, the video content VD received by the central electronic computer 1 and generates a plurality P-E of visual elements (tags) found in the video content VD, associating a corresponding confidence score with each visual element.

The definition of "confidence score" was provided above.

As already mentioned above, the usable artificial intelligence algorithms are, for example, visual ranking algorithms in continuous evolution, the purpose of which is to analyze each individual frame of the video content VD, divide each individual frame into areas up to identifying recognizable individual visual elements (for example, cat, cup, automobile, and so on) and return the name of the recognized visual element, while associating the position coordinates within the frame and the respective size with such a name.

Moreover, in an embodiment, in combination with the previous one, the classifier module 40 aggregates the results obtained from the analysis of all the frames of the video content VD in order to yield the plurality P-E of visual elements found in the video content which is as consistent as possible with the general contents of the video content VD.

Returning in general to the method 700 according to the present invention, the method 700 further comprises a step of receiving 704, by the central electronic computer 1, the plurality P-E of visual elements found in the video content VD with a corresponding confidence score, generated by the classifier module 40, associated with each visual element.

The method 700 further comprises a step of generating 705, by the central electronic computer 1, at least one tag TG representative of the video content VD starting from the plurality P-E of visual elements generated by and received from the classifier module 40.

In greater detail, the plurality P-E of visual elements (tags) received from the classifier module 40 is processed by the central electronic computer 1 and translated into synonymous tags in a root tag database (not shown in the drawings) operatively connected to the central electronic computer 1.

An example of at least one tag which can be generated by the central electronic computer 1 was provided above.

As mentioned above, it should be noted that the greater the number of tags which can be generated, representative of the video content VD, the better the representation of the video content VD by means of the corresponding tags.

According to an embodiment, in combination with any one of those described, the step of generating 705 is performed by the central electronic computer 1 to generate more than one tag TG representative of the video content VD starting from the plurality P-E of visual elements generated by and received from the classifier module 40, preferably at least four tags.

The method 700 further comprises a step of selecting 706, by the central electronic computer 1, a sub-group S-TK of audio tracks of said plurality P-TK of audio tracks stored in a memory unit 2 of the central electronic computer 1 based on the at least one tag TG representative of the video content VD generated by the central electronic computer 1.

Each audio track of said plurality P-TK of audio tracks comprises a plurality P-T of tags associated with said audio track.

Each audio track of the plurality P-TK of audio tracks is stored in the memory unit 2 by assigning a numerical value representative of a score to each tag of the respective plurality P-T of tags.

The method 700 further comprises a step of searching 707, by the central electronic computer 1, for the at least one tag TG representative of the video content VD generated by the central electronic computer 1 in each plurality P-T of tags assigned to each audio track of said plurality P-TK of audio tracks.

The step of selecting 706 is performed, by the central electronic computer 1, to select the audio tracks comprising the searched at least one tag TG as sub-plurality S-TK of audio tracks of said plurality P-TK of audio tracks.

The method 700 further comprising a step of sorting 708, by the central electronic computer 1, the selected audio tracks of the sub-plurality S-TK of audio tracks in descending order based on the score of the searched at least one tag TG assigned to each audio track.

An example of a method of storing of the plurality P-TK of audio tracks in the memory unit 2 of the central electronic computer 1 and a method for selecting a sub-group S-TK of audio tracks of said plurality P-TK of audio tracks based on the search for the at least one tag TG have already described above and thus are not repeated for brevity of disclosure.

Returning to the method 700 according to the present invention, the method 700 further comprises a step of providing 709, by the central electronic computer 1, the user U requesting the service for real-time audio/-video synchronization with the sub-group S-TK of audio tracks selected and sorted based on the relevance to the uploaded video content VD.

In an embodiment, in combination with any one of those described above, the step of providing 709 the sub-group S-TK of audio tracks selected and sorted based on the relevance to the uploaded video content VD is performed by the central electronic computer 1 by means of a respective area A2 for providing audio tracks of the user interface I-U usable online by means of the local electronic device 10 of the user U requesting the service for real-time audio/video synchronization.

In an embodiment, in combination with any one of those described above, shown with dashed lines in Figure 7, the method 700 further comprises a step of providing 710, by the central electronic computer 1, the at least one tag TG used to search for the sub-group S-TK of audio tracks in a respective area A3 for displaying tags of the user interface I-U usable online by means of the local electronic device 10 of the user U requesting the service for real-time audio/video synchronization.

Returning in general to the method 700 according to the present invention, the method 700 further comprises a step of receiving 711, by the central electronic computer 1, from the user U, a selection of an audio track TK of said sub-group S-TK of audio tracks to be synchronized with the video content VD.

The method 700 further comprises a step of generating 712, by the central electronic computer 1, an audio/video content AV comprising the uploaded video content VD synchronized with the audio track TK selected by the user U requesting the service for real-time audio/video synchronization.

In this regard, in an embodiment, shown with dashed lines in Figure 7, the step of generating 712, by the central electronic computer 1, the audio/video content AV, comprises steps (performed by the central electronic computer 1) of:

- establishing 713 a starting point of the video content VD;
- establishing 714 a starting point of the selected audio track TK;
- establishing 715 a maximum duration of the video (in seconds or up to the end of either the video content VD or the selected audio track TK);
- encoding 716 the video content VD and the selected audio track TK (operation which can require several minutes by the central electronic computer 1);
- decoding 717 the video content VD and the selected audio track TK, generating the audio/video content AV as a mix of the video content VD with the selected audio track TK.

According to an embodiment, in combination with the previous one and shown with dashed lines in Figure 7, the generating step 712 further comprises a step of notifying 718 the user U requesting the service for real-time audio/video synchronization (for example, by means of a notification on the user interface I-U or other channel, e.g., email) of the end of the encoding and/or decoding operations, thus the generation of the audio/-video content AV.

As already mentioned above, it should be noted that the audio/video content is preferably generated in MPEG-4 format with a set restrained bit-rate (for example, equal to 1-2 Mbit/s) so as to be easily used as a preview version of a final audio/video content.

Returning in general to the method 700 according to the present invention, the method 700 comprises a step of providing 719, by the central electronic computer 1, the user U requesting the service for real-time audio/-video synchronization with the generated audio/video content AV.

Possible operations the user U can perform while using the received audio/video content AV of the central electronic computer 1 by means of the user interface I-U usable online were already described above.

With reference again to Figure 7, the method 700 further comprises a symbolic end step ED.

With reference now to the aforesaid drawings, an example of implementing the method for real-time audio/video synchronization according to the present invention is described.

The central electronic computer 1 uploads a video content VD received by means of a user interface I-U (Figure 2) provided by the central electronic computer 1, usable online by a local electronic device 10 of a user U requesting a service for real-time audio/video synchronization, operatively connected to the central electronic computer 1 by means of a data communication network NTW (Figure 3).

The central electronic computer 1 provides the uploaded video content VD to a classifier module 40 operatively connected to the central electronic computer 1, for example by means of the data communication network NTW.

The classifier module 40 analyzes, by means of specific artificial intelligence algorithms, frame by frame, the video content VD received by the central electronic computer 1 and generates a plurality P-E of visual elements found in the video content VD, associating a corresponding confidence score with each visual element.

The central electronic computer 1 receives the plurality P-E of visual elements found in the video content

VD with a corresponding confidence score, generated by the classifier module 40, associated with each visual element.

The central electronic computer 1 generates at least one tag TG representative of the video content VD starting from the plurality (P-E) of visual elements generated by and received from the classifier module 40.

The central electronic computer 1 selects a sub-group S-TK of audio tracks of said plurality P-TK of audio tracks stored in a memory unit 2 of the central electronic computer 1 based on the at least one tag TG representative of the video content VD generated by the central electronic computer 1.

Each audio track of said plurality P-TK of audio tracks comprises a plurality P-T of tags associated with said audio track.

Each audio track of the plurality P-TK of audio tracks is stored in the memory unit 2 by assigning a numerical value representative of a score to each tag of the respective plurality P-T of tags.

The central electronic computer 1 searches for the at least one tag TG representative of the video content VD generated by the central electronic computer 1 in each plurality P-T of tags assigned to each audio track of said plurality P-TK of audio tracks.

The central electronic computer 1 selects the audio tracks comprising the searched at least one tag TG as sub-plurality S-TK of audio tracks of said plurality P-TK of audio tracks.

The central electronic computer 1 sorts the selected audio tracks of the sub-plurality S-TK of audio tracks in descending order based on the score of the searched at least one tag TG assigned to each audio track.

The central electronic computer 1 provides the user U requesting the service for real-time audio/video synchronization with the sub-group S-TK of audio tracks selected and sorted based on the relevance to the uploaded video content VD (Figure 3).

The central electronic computer 1 receives a selection of an audio track TK of said sub-group S-TK of audio tracks to be synchronized with the video content VD, from the user U requesting the service for real-time audio/video synchronization.

The central electronic computer 1 generates an audio/video content AV comprising the uploaded video content VD synchronized with the audio track TK selected by the user U requesting the service for real-time audio/video synchronization.

The central electronic computer 1 provides the user U requesting the service for real-time audio/video synchronization with the generated audio/video content AV (Figure 4).

The user U plays the audio/video content AV (Figure 5).

The user U can skip to a next play point of the video track and the audio track by selecting such a next point on a first slider bar B1 of the video track VD or on a second slider bar B2 of the selected audio track TK (Figure 5).

Thereby, the user U can best assess whether the selected audio track TK is suitable or not to the uploaded video content VD according to the creative idea thereof.

If the selected audio track TK synchronized with the video content VD in the audio/video content AV used as a preview by means of the user interface I-U is not suitable, in order to find an audio track which better corresponds to one's creativity, the user U can select another audio track of the sub-group S-TK provided in the respective area A2 for providing audio tracks of the user interface I-U or cause the central electronic computer 1 to generate a further sub-group S-TK of audio tracks of the plurality P-TK of audio tracks stored in the memory unit 2 of the central electronic computer 1, and then execute an audio track of the further sub-group S-TK of audio tracks.

As can be seen, the object of the invention is fully achieved.

Indeed, the method and related system allow providing relevant audio tracks with the content of the uploaded reference video specifically selected and sorted according to a score assigned and to a searched at least one tag after identifying visual elements in the video content which are characteristic and representative of the video content.

Thereby, the process times for selecting and testing the audio track on the reference video can be significantly optimized, eliminating the need to download the song to synchronize it under a video with a specific software.

Moreover, a musical supervisor can select the audio track(s) directly from a web browser, thus being able to have real-time performance feedback.

Finally, in order to optimize the process, the reference video can be directly tested in the platform provided (user interface usable online) while simply and intuitively synchronizing the reference video with the audio tracks selected, sorted and suggested on the platform.

Those skilled in the art may make changes and adaptations to the embodiments of the method and related system described above or can replace elements with others which are functionally equivalent in order to meet contingent needs. Each of the features described above as belonging to a possible embodiment can be implemented irrespective of the other embodiments described.

**Claims**

1. A method (700) for real-time audio/video synchronization, comprising steps of:

   - uploading (701), by a central electronic computer (1), a video content (VD) received by means of a user interface (I-U) provided by the central electronic computer (1), usable online by a local electronic device (10) of a user (U) requesting a service for real-time audio/video synchronization, operatively connected to the central electronic computer (1) by means of a data communication network (NTW);

- providing (702), by the central electronic computer (1), the uploaded video content (VD) to a classifier module (40) operatively connected to the central electronic computer (1), the classifier module (40) analyzing, by means of specific artificial intelligence algorithms, frame by frame, the video content (VD) received from the central electronic computer (1) and generating a plurality (P-E) of visual elements found in the video content (VD), associating a corresponding confidence score with each visual element;

- receiving (704), by the central electronic computer (1), the plurality (P-E) of visual elements found in the video content (VD) with a corresponding confidence score, generated by the classifier module (40), associated with each visual element;

- generating (705), by the central electronic computer (1), at least one tag (TG) representative of the video content (VD) starting from the plurality (P-E) of visual elements generated by and received from the classifier module (40);

- selecting (706), by the central electronic computer (1), a sub-group (S-TK) of audio tracks of said plurality (P-TK) of audio tracks stored in a memory unit (2) of the central electronic computer (1), based on the at least one tag (TG) representative of the video content (VD) generated by the central electronic computer (1), each audio track of said plurality (P-TK) of audio tracks comprises a plurality (P-T) of tags associated with said audio track, each audio track of the plurality (P-TK) of audio tracks being stored in the memory unit (2) by assigning a numerical value representative of a score to each tag of the respective plurality (P-T) of tags;

- searching (707), by the central electronic computer (1), for the at least one tag (TG) representative of the video content (VD) generated by the central electronic computer (1) in each plurality (P-T) of tags assigned to each audio track of said plurality (P-TK) of audio tracks, the step of selecting (706) being performed, by the central electronic computer (1), to select the audio tracks comprising the searched at least one tag (TG) as the sub-plurality (S-TK) of audio tracks of said plurality (P-TK) of audio tracks;

- sorting (708), by the central electronic computer (1), the selected audio tracks of the sub-plurality (S-TK) of audio tracks in descending order based on the score of the searched at least one tag (TG) assigned to each audio track;

- providing (709), by the central electronic computer (1), the user (U) requesting the service for real-time audio/video synchronization with the sub-group (S-TK) of audio tracks selected and sorted based on the relevance to the uploaded video content (VD);

- receiving (711) from the user (U) requesting the service for real-time audio/video synchronization, by the central electronic computer (1), a selection of an audio track (TK) of said sub-group (S-TK) of audio tracks to be synchronized with the video content (VD);

- generating (712), by the central electronic computer (1), an audio/video content (AV) comprising the uploaded video content (VD) synchronized with the audio track (TK) selected by the user (U) requesting the service for real-time audio/video synchronization;

- providing (719), by the central electronic computer (1), the user (U) requesting the service for real-time audio/video synchronization with the generated audio/video content (AV).

2. The method (700) according to claim 1, wherein the step of providing (702) the video content (VD) to the classifier module (40) comprises a step of processing (703), by the central electronic computer (1), the uploaded video content (VD) so as to reduce the size thereof, in order to limit the uploading and analysis times by the classifier module (40).

3. The method (700) according to any one of the preceding claims, wherein the step of providing (709) the sub-group (S-TK) of audio tracks selected and sorted based on the relevance to the uploaded video content (VD) is performed by the central electronic computer (1) by means of a respective area (A2) for providing audio tracks of the user interface (I-U) usable online by means of the local electronic device (10) of the user (U) requesting the service for real-time audio/video synchronization.

4. The method (700) according to any one of the preceding claims, further comprising a step of providing (710), by the central electronic computer (1), the at least one tag (TG) used to search for the sub-group (S-TK) of audio tracks in a respective area (A3) for displaying tags of the user interface (I-U) usable online by means of the local electronic device (10) of the user (U) requesting the service for real-time audio/video synchronization.

5. The method (700) according to any one of the preceding claims, wherein the step of generating (712), by the central electronic computer (1), the audio/video content (AV) comprises steps of:

- establishing (713) a starting point of the video content (VD);
- establishing (714) a starting point of the selected audio track (TK);
- establishing (715) a maximum duration of the video;
- encoding (716) the video content (VD) and the selected audio track (TK);
- decoding (717) the video content (VD) and the audio track (TK) generating the audio/video content (AV) as a mix of the video content (VD) with the selected audio track (TK).

6. The method (700) according to claim 5, wherein the step of generating (712), by the central electronic computer (1), the audio/video content (AV) comprises a step of notifying (718) the user (U) requesting the service for real-time audio/video synchronization, of the end of the encoding operation, thus of the generation of the audio/video content (AV).

7. The method (700) according to any one of the preceding claims, wherein the generating step (705) is performed by the central electronic computer (1) to generate more than one tag (TG) representative of the video content (VD) starting from the plurality (P-E) of visual elements generated by and received from the classifier module (40).

8. A system for real-time audio/video synchronization (100), comprising a central electronic computer (1) operatively connected to a local electronic device (1) of a user (U) requesting a service for real-time audio/video synchronization, by means of a data communication network (NTW), the central electronic computer (1) being operatively connected to a classifier module (40), the classifier module (40) being configured, by means of specific artificial intelligence algorithms, to analyze, frame by frame, a video content (VD) received from the central electronic computer (1) and generate a plurality (P-E) of visual elements found in the video content (VD), associating a corresponding confidence score with each visual element,
the central electronic computer (1) being configured to perform the steps of the method for real-time audio/video synchronization according to any one of the preceding claims.

**Patentansprüche**

1. Verfahren (700) zur Audio/Video-Synchronisierung in Echtzeit, das die folgenden Schritte umfasst:

- Hochladen (701), mittels eines zentralen elektronischen Computers (1), eines Videoinhalts (VD), der mittels einer von dem zentralen elektronischen Computer (1) bereitgestellten Benutzeroberfläche (I-U) empfangen wird, die online von einer lokalen elektronischen Vorrichtung (10) eines Benutzers (U) nutzbar ist, der einen Dienst für die Audio/Video-Synchronisierung in Echtzeit anfordert, und der über ein Datenkommunikationsnetz (NTW) mit dem zentralen elektronischen Computer (1) wirkverbunden ist;
- Bereitstellen (702), mittels des zentralen elektronischen Computers (1), des hochgeladenen Videoinhalts (VD) an ein Klassifizierungsmodul (40), das mit dem zentralen elektronischen Computer (1) wirkverbunden ist, wobei das Klassifizierungsmodul (40) den von dem zentralen elektronischen Computer (1) empfangene Videoinhalt (VD) Bild für Bild mittels spezieller Algorithmen der künstlichen Intelligenz analysiert und eine Vielzahl (P-E) von visuellen Elementen erzeugt, die in dem Videoinhalt (VD) gefunden wurden, wobei jedem visuellen Element ein entsprechender Konfidenz-Score zugewiesen wird;
- Empfangen (704), mittels des zentralen elektronischen Computers (1), der Vielzahl (P-E) von visuellen Elementen, die in dem Videoinhalt (VD) gefunden wurden, wobei jedem visuellen Element ein entsprechender Konfidenz-Score zugewiesen wird, der von dem Klassifizierungsmodul (40) erzeugt wird;
- Erzeugen (705), mittels des zentralen elektronischen Computers (1), mindestens eines Tags (TG), der den Videoinhalt (VD) darstellt, ausgehend von der Vielzahl (P-E) von visuellen Elementen, die von dem Klassifizierungsmodul (40) erzeugt und empfangen werden;
- Auswählen (706), mittels des zentralen elektronischen Computers (1), einer Untergruppe (S-TK) von Audiospuren der Vielzahl (P-TK) von Audiospuren, die in einer Speichereinheit (2) des zentralen elektronischen Computers (1) gespeichert sind, basierend auf dem mindestens einen Tag (TG), der den von dem zentralen elektronischen Computer (1) erzeugten Videoinhalt (VD) darstellt, wobei jede Audiospur der Vielzahl (P-TK) von Audiospuren eine Vielzahl (P-T) von Tags umfasst, die der Audiospur zugewiesen sind, wobei jede Audiospur der Vielzahl (P-TK) von Audiospuren in der Speichereinheit (2) gespeichert wird, indem jedem Tag der jeweiligen Vielzahl (P-T) von Tags ein numerischer Wert zugewiesen wird, der einen Score darstellt;
- Suchen (707), mittels des zentralen elektronischen Computers (1), nach dem mindestens einen Tag (TG), der den von dem zentralen elektronischen Computer (1) erzeugten Videoinhalt (VD) darstellt, in jeder Vielzahl (P-T) von Tags, die jeder Audiospur der Vielzahl (P-TK) von Audiospuren zugewiesen werden, wobei der Schritt des Auswählens (706) von dem zentralen elektronischen Computer (1) ausgeführt wird, um die Audiospuren, die den gesuchten mindestens einen Tag (TG) umfassen, als die Untervielzahl (S-TK) der Audiospuren der Vielzahl (P-TK) von Audiospuren auszuwählen;
- Sortieren (708), mittels des zentralen elektronischen Computers (1), der ausgewählten Audiospuren der Untervielzahl (S-TK) von Audiospuren in absteigender Reihenfolge basierend auf dem Score des gesuchten mindestens einen Tags (TG), der jeder Audiospur zugewiesen ist;
- Bereitstellen (709), mittels des zentralen elektronischen Computers (1), der Untergruppe (S-TK) von Audiospuren, die basierend auf der Relevanz für den hochgeladenen Videoinhalt (VD) ausgewählt und sortiert wurde, an den Benutzer (U), der den Dienst für die Audio/Video-Synchronisierung in Echtzeit anfordert;
- Empfangen (711), von dem Benutzer (U), der den Dienst für die Audio/Video-Synchronisierung in Echtzeit anfordert, mittels des zentralen elektronischen Computers (1), einer Auswahl einer Audiospur (TK) der Untergruppe (S-TK) von Audiospuren, die mit dem Videoinhalt (VD) synchronisiert werden soll;
- Erzeugen (712), mittels des zentralen elektronischen Computers (1), eines Audio/Video-Inhalts (AV), der den hochgeladenen Videoinhalt (VD) umfasst, der mit der Audiospur (TK) synchronisiert ist, die von dem Benutzer (U) ausgewählt wurde, der den Dienst für die Audio/Video-Synchronisierung in Echtzeit anfordert;
- Bereitstellen (719), mittels des zentralen elektronischen Computers (1), des erzeugten Audio/Video-Inhalts (AV) an den Benutzer (U), der den Dienst für die Audio/Video-Synchronisierung in Echtzeit anfordert.

2. Verfahren (700) nach Anspruch 1, wobei der Schritt des Bereitstellens (702) des Videoinhalts (VD) an das Klassifizierungsmodul (40) einen Schritt des Verarbeitens (703), mittels des zentralen elektronischen Computers (1), des hochgeladenen Videoinhalts (VD) umfasst, so dass dessen Größe reduziert wird, um die Upload- und Analysezeiten mittels des Klassifizierungsmoduls (40) zu begrenzen.

3. Verfahren (700) nach einem der vorstehenden Ansprüche, wobei der Schritt des Bereitstellens (709) der Untergruppe (S-TK) von Audiospuren, die basierend auf der Relevanz für den hochgeladenen Videoinhalt (VD) ausgewählt und sortiert wurden, von dem zentralen elektronischen Computer (1) mittels eines entsprechenden Bereichs (A2) zum Bereitstellen von Audiospuren der Benutzeroberfläche (I-U) durchgeführt wird, die online von der lokalen elektronischen Vorrichtung (10) des Benutzers (U) nutzbar ist, der den Dienst für die Audio/Video-Synchronisierung in Echtzeit anfordert.

4. Verfahren (700) nach einem der vorstehenden Ansprüche, das ferner einen Schritt des Bereitstellens (710), mittels des zentralen elektronischen Computers (1), des mindestens einen Tags (TG) umfasst, der für die Suche nach der Untergruppe (S-TK) von Audiospuren in einem entsprechenden Bereich (A3) zur Anzeige der Tags der Benutzeroberfläche (I-U) verwendet wird, die online von der lokalen elektronischen Vorrichtung (10) des Benutzers (U) nutzbar ist, der den Dienst für die Audio/Video-Synchronisierung in Echtzeit anfordert.

5. Verfahren (700) nach einem der vorstehenden Ansprüche, wobei der Schritt des Erzeugens (712), mittels des zentralen elektronischen Computers (1), des Audio/Video-Inhalts (AV) die folgenden Schritte umfasst:

   - Festlegen (713) eines Startpunkts des Videoinhalts (VD);
   - Festlegen (714) eines Startpunkts der ausgewählten Audiospur (TK);
   - Festlegen (715) einer maximalen Dauer des Videos;
   - Verschlüsseln (716) des Videoinhalts (VD) und der ausgewählten Audiospur (TK);
   - Entschlüsseln (717) des Videoinhalts (VD) und der Audiospur (TK), indem der Audio/Video-Inhalt (AV) als eine Mischung aus dem Videoinhalt (VD) und der ausgewählten Audiospur (TK) erzeugt wird.

6. Verfahren (700) nach Anspruch 5, wobei der Schritt des Erzeugens (712), mittels des zentralen elektronischen Computers (1), des Audio/Video-Inhalts (AV) einen Schritt des Benachrichtigens (718) des Benutzers (U), der den Dienst für die Audio/Video-Synchronisierung in Echtzeit anfordert, über das Ende des Verschlüsselungsvorgangs und somit über die Erzeugung des Audio/Video-Inhalts (AV) umfasst.

7. Verfahren (700) nach einem der vorstehenden Ansprüche, wobei der Erzeugungsschritt (705) von dem zentralen elektronischen Computer (1) durchgeführt wird, um mehr als einen Tag (TG), der den Videoinhalt (VD) darstellt, ausgehend von der Vielzahl (P-E) von visuellen Elementen zu erzeugen, die von dem Klassifizierungsmodul (40) erzeugt und empfangen werden.

8. System zur Audio/Video-Synchronisierung in Echtzeit (100), das einen zentralen elektronischen Computer (1) umfasst, der mit einer lokalen elektronischen Vorrichtung (1) eines Benutzers (U), der einen Dienst für die Audio/Video-Synchronisierung in Echtzeit anfordert, über ein Datenkommunikationsnetz (NTW) wirkverbunden ist, wobei der zentrale elektronische Computer (1) mit einem Klassifizierungsmodul (40) wirkverbunden ist, wobei das Klassifizierungsmodul (40) dazu ausgebildet ist, einen von dem zentralen elektronischen Computer (1) empfangene Videoinhalt (VD) Bild für Bild mittels spezieller Algorithmen der künstlichen Intelligenz zu analysieren und eine Vielzahl (P-E) von visuellen Elementen zu erzeugen, die in dem Videoinhalt (VD) gefunden wurden, wobei jedem visuellen Element ein entsprechender Konfidenz-Score zugewiesen wird, wobei der zentrale elektronische Computer (1) dazu ausgebildet ist, die Schritte des Verfahrens zur Audio/Video-Synchronisierung in Echtzeit nach einem der vorstehenden Ansprüche durchzuführen.

## Revendications

1. Procédé (700) pour une synchronisation audio/vidéo en temps réel, comprenant des étapes de :

   - charger (701), par un ordinateur électronique central (1), un contenu vidéo (VD) reçu par le biais d'une interface d'utilisateur (I-U) fournie par l'ordinateur électronique central (1), utilisable en ligne par un dispositif électronique local (10) d'un utilisateur (U) demandant un service pour synchronisation audio/vidéo en temps réel, fonctionnellement relié à l'ordinateur électronique central (1) moyennant un réseau de communication de données (NTW),
   - fournir (702), par l'ordinateur électronique central (1), le contenu vidéo (VD) chargé à un module classificateur (40) fonctionnellement relié à l'ordinateur électronique central (1), le module classificateur (40) analysant, moyennant des algorithmes spécifiques d'intelligence artificielle, image par image, le contenu vidéo (VD) reçu de l'ordinateur électronique central (1) et engendrant une pluralité d'éléments visuels (P-E) trouvés dans le contenu vidéo (VD), associant un indice de confiance à chaque élément visuel ;
   - recevoir (704) de l'ordinateur électronique central (1) la pluralité d'éléments visuels (P-E) trouvés dans le contenu vidéo (VD) avec un indice de confiance correspondant engendré par le module classificateur (40), associé à chaque élément visuel ;
   - engendrer (705), par l'ordinateur électronique central (1), au moins un tag (TG) représentant le contenu vidéo (VD) partant de la pluralité d'éléments visuels (P-E) engendrés par le et reçu du module classificateur (40) ;
   - sélectionner (706), par l'ordinateur électronique (1), un sous-groupe de voies audio (S-TK) de la pluralité de voies audio (P-TK) stockées dans une unité de mémoire (2) de l'ordinateur électronique central (1), sur la base dudit au moins un tag (TG) représentant le contenu vidéo (VD) engendré par l'ordinateur électronique central (1), chaque voie audio de ladite pluralité de voies audio (P-TK) comprenant une pluralité de tags (P-T) associés à ladite voie audio, chaque voie audio de la pluralité de voies audio (P-TK) étant stocké dans l'unité de mémoire (2) en assignant une valeur numérique représentatif d'un score à chaque tag de la pluralité de tags (P-T) respectifs ;
   - rechercher (707), par l'ordinateur électronique central (1), ledit au moins un tag (TG) représentant le contenu vidéo (VD) engendré par l'ordinateur électronique central (1), dans chaque pluralité de tags (P-T) assignés à chaque voie audio de la pluralité de voies audio (P-TK), l'étape de sélectionner (706) étant mise en œuvre par l'ordinateur électronique central (1) pour sélectionner les voies audio comprenant ledit au moins un tag (TG) recherché comme sous-pluralité de voies audio (S-TK) de la pluralité de voies audio (P-TK) ;
   - trier (708), par l'ordinateur électronique central (1), les voies audio sélectionnées de la sous-pluralité (S-TK) en ordre décroissant sur la base du score dudit au moins un tag (TG) assigné à chaque voie audio ;
   - fournir (709), par l'ordinateur électronique central (1), à l'utilisateur (U) demandant le service de synchronisation audio/vidéo en temps réel, le sous-groupe de voies audio (S-TK) sélectionnées et triées sur la base de la relevance pour le contenu vidéo (VD) chargé ;
   - recevoir (711) de l'utilisateur (U) demandant, par l'ordinateur électronique central (1), le service de synchronisation audio/vidéo en temps réel, une sélection de voies audio (TK) du sous-groupe de voies audio (S-TK) à être synchronisées avec le contenu vidéo (VD) ;
   - engendrer (712), par l'ordinateur électronique central (1), un contenu audio/vidéo (AV) comprenant le contenu vidéo (VD) chargé synchronisé avec la voie audio (TK) sélectionnée par l'utilisateur (U) demandant le service de synchronisation audio/vidéo en temps réel ;
   fournir (719), par l'ordinateur électronique central (1), à l'utilisateur (U) demandant le service de synchronisation audio/vidéo en temps réel, le contenu audio/vidéo (AV) engendré.

2. Procédé (700) selon la revendication 1, dans lequel l'étape de fournir (702) le contenu vidéo (VD) au module classificateur (40) comprend une étape de traiter (703) le contenu vidéo (VD) chargé par l'ordinateur électronique central (1) de façon à réduire sa taille afin de limiter les temps d'analyse et de chargement par le classifier module (40).

3. Procédé (700) selon l'une des revendications précédentes, dans lequel l'étape de fournir (709) le sous-groupe de voies audio (S-TK) choisies et triées sur la base de la relevance du contenu vidéo (VD) chargé est effectuée par l'ordinateur électronique central (1) moyennant un champ (A2) respectif pour fournir des voies audio de l'interface d'utilisateur (I-U) utilisable en ligne moyennant le dispositif électronique local (10) de l'utilisateur (U) demandant le service de synchronisation audio/vidéo en temps réel.

4. Procédé (700) selon l'une des revendications précédentes, comprenant en outre une étape de fournir (710), par l'ordinateur électronique central (1), ledit au moins un tag (TG) utilisé pour rechercher le sous-groupe de voies audio (S-TK) dans un champ (A3) respectif pour afficher des tags de l'interface d'utilisateur (I-U) utilisable en ligne moyennant le dispositif électronique local (10) de l'utilisateur (U) demandant le service de synchronisation audio/vidéo en temps réel.

5. Procédé (700) selon l'une des revendications précédentes, dans lequel l'étape d'engendrer (712) le contenu audio/vidéo (AV) par l'ordinateur électronique central (1) comprend des étapes de :

    - établir (713) un point de départ du contenu vidéo (VD),
    - établir (714) un point de départ de la voie audio (TK) sélectionnée,
    - établir (715) une durée maximale de la vidéo,
    - coder (716) le contenu vidéo (VD) et la voie audio (TK) sélectionnée,
    - décoder (717) le contenu vidéo (VD) et la voie audio (TK) engendrant le contenu audio/vidéo (AV) comme un mélange du contenu vidéo (VD) avec la voie audio (TK) sélectionnée.

6. Procédé (700) selon la revendication 5, dans lequel l'étape d'engendrer (712) le contenu audio/vidéo (AV) par l'ordinateur électronique central (1) comprend une étape d'indiquer (718) à l'utilisateur (U) demandant le service de synchronisation audio/vidéo en temps réel, la fin de l'opération de codage et ainsi de la génération du contenu audio/vidéo (AV).

7. Procédé (700) selon l'une des revendications précédentes, dans lequel l'étape d'engendrer (705) est effectuée par l'ordinateur électronique central (1) pour engendrer plus qu'un tag (TG) représentant le contenu vidéo (VD) partant de la pluralité d'éléments visuels (P-E) engendrés par le et reçu du module classificateur (40).

8. Système de synchronisation audio/vidéo en temps réel (100) comprenant un ordinateur électronique central (1) fonctionnellement relié à un dispositif électronique local (1) d'un utilisateur (U) demandant un service de synchronisation audio/vidéo en temps réel moyennant un réseau de communication de données (NTW), l'ordinateur électronique central (1) étant relié fonctionnellement à un module classificateur (40), le module classificateur (40) étant configuré par des algorithmes d'intelligence artificielle spécifiques pour analyser le contenu vidéo (VD) reçu de l'ordinateur électronique central (1) et engendrant une pluralité d'éléments visuels (P-E) trouvés dans le contenu vidéo (VD), associant un indice de confiance à chaque élément visuel, l'ordinateur électronique central (1) étant configuré pour effectuer les étapes du procédé selon l'une des revendications précédentes.

Fig. 1

EP 4 460 771 B1

Fig. 2

VD

A1

TK

I-U

A3

AV

B2

A2

S-TK

| TK | AT | LG |
|------|------|------|
| TK-1 | AT-1 | LG-1 |
| TK-2 | AT-2 | LG-2 |
| TK-3 | AT-3 | LG-3 |

Fig. 3

Fig. 4

Fig. 5

Fig. 6

ST

701

703 — 702

704

700

705

706

707

708

709

710    711

712    | 713 | 714 | 715 |
       | 716 | 717 | 718 |

719

ED

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017092328 A1